# EUROPÄISCHE PATENTSCHRIFT

(11) **EP 2 762 268 B1**
(45) Veröffentlichungstag und Bekanntmachung des Hinweises auf die Patenterteilung: **06.06.2018**
(21) Anmeldenummer: 14150534.7
(22) Anmeldetag: 09.01.2014
(51) Int. Cl.: H01P 3/12

(54) **Vorrichtung zur Überwachung der Lage eines Werkzeugs oder Werkzeugträgers an einer Arbeitsspindel**
Device for monitoring the location of a tool or tool holder on a work spindle
Dispositif de surveillance de la position d'un objet ou d'un porte-objet sur un arbre moteur

(30) Priorität: 31.01.2013 DE 102013100979
(43) Veröffentlichungstag der Anmeldung: 06.08.2014
(73) Patentinhaber: Ott-Jakob Spanntechnik GmbH, 87663 Lengenwang (DE)
(72) Erfinder: Bonerz, Stefan, 87616 Marktoberdorf (DE); Greif, Josef, 87654 Friesenried (DE)
(74) Vertreter: Charrier Rapp & Liebau

(56) Entgegenhaltungen:
- EP-A1- 1 148 572
- EP-A1- 1 542 310
- EP-A1- 1 783 855
- EP-A1- 2 210 700
- WO-A1-2009/030045
- DE-A1- 4 005 654
- US-A1- 2003 107 451
- US-B1- 6 433 756

## Beschreibung

Die Erfindung betrifft eine Vorrichtung zur Überwachung der Lage eines Werkzeugs oder Werkzeugträgers an einer Arbeitsspindel nach dem Oberbegriff des Anspruchs 1.

Während der von modernen numerisch gesteuerten Werkzeugmaschinen vollzogenen Bearbeitungsvorgänge sind häufige schnelle, im Allgemeinen automatisch durchgeführte Werkzeugwechsel notwendig. Die hierfür eingesetzten Spannvorrichtungen sind meistens modular zweiteilig ausgeführt und weisen zueinander korrespondierende Plananlagen auf, die, unterstützt von sehr großen Spannkräften, für einen präzisen und steifen Sitz der Werkzeuge sorgen. Allerdings existiert bei der Kontaktierung der zueinander komplementären Plananlagen ein wesentlicher Störfaktor, der sich notwendigerweise aus den Betriebsbedingungen von spanabhebend bearbeitenden Werkzeugmaschinen ergibt. Sofern das in Form von mitunter sehr feinen Spänen vorhandene abgetragene Material aus dem Wirkbereich der Maschinen nicht vollständig entfernt werden kann, besteht in Zusammenwirken mit den hierfür verwendeten Mitteln, z.B. Bohr- und Schneidemulsionen, die Möglichkeit der Anhaftung von Spänen auf den Plananlagen. Hierdurch ist in den meisten Fällen eine Fehlausrichtung des Werkzeugs und unzureichende Steifigkeit der Einspannung zu erwarten. Sehr feine Späne führen zu kaum bemerkbaren Fehleinspannungen, die aber trotzdem ein unzureichendes Bearbeitungsergebnis zur Folge haben.

Aus der DE 10 2009 005 745 A1 ist eine Überwachungsvorrichtung zur Erkennung solcher Fehleinspannungen bekannt. Die Funktion dieser Überwachungsvorrichtung basiert auf der Ausbreitung eines Radarsignals in einem innerhalb der Arbeitsspindel durch mehrere Bohrungen gebildeten Kanal, der im Betrieb unmittelbar durch eine Plananlagefläche des Werkzeugs oder Werkzeugträgers abgeschlossen wird, wobei der Endbereich des Kanals als Hohlraumresonator ausgebildet ist. Eine fehlerhafte Anlage des Werkzeugs oder Werkzeugträgers an der Werkzeugspannvorrichtung kann anhand eines Radarsignals detektiert werden, das in den Kanal von einem außerhalb der Arbeitsspindel angeordneten Sender eingestrahlt, an dem Werkzeug oder Werkzeugträger reflektiert und durch den Kanal zu dem Sender zurückgeleitet wird.

Dabei ist der Sender an einem Stator angeordnet, in dem die Arbeitsspindel drehbar gelagert ist, und das Radarsignal wird zunächst in einen Kanal in dem Stator, mit dem der Kanal in der Arbeitsspindel in einer Winkelposition der Arbeitsspindel fluchtet, eingestrahlt und passiert zwischen dem Stator und der Arbeitsspindel auf den Hin- und Rückweg einen Luftspalt zwischen dem Stator und der Arbeitsspindel. Dieser Luftspalt verursacht durch Reflexion und Dämpfung eine Beeinträchtigung der Qualität des Messsignals.

Aus der EP 1 783 855 A1 ist eine Verbindungsstruktur zur Übertragung hochfrequenter Signale zwischen zwei auf verschiedenen Chips eines Multichip-Moduls verlaufenden Schlitzleitungen bekannt, bei der die zu verbindenden Schlitzleitungen durch zwei plattenförmige dielektrische Substrate mit einer geschlitzten Elektrodenschicht auf der jeweiligen Substratoberfläche gebildet werden. Die beiden Substrate sind durch einen geradlinigen Spalt konstanter Breite voneinander getrennt und so zueinander ausgerichtet, dass die Elektrodenschichten der beiden Chips in einer gemeinsamen Ebene liegen und die Schlitzleitungen miteinander fluchten. Die einzelnen Chips des Multichip-Moduls sind relativ zueinander fixiert.

Aus der EP 1 542 310 A1 ist ein Drehgelenk für einen Hohlwellenleiter mit einer Umlenkung der Ausbreitungsrichtung um 90° zwischen einer radial zur Drehachse verlaufenden Richtung und der Axialrichtung der Drehachse bekannt. Der Hohlwellenleiter ist durch einen radialen Kanal in einem der beiden Teile und einen axialen Kanal in dem anderen Teil realisiert. Die US 2003/107451 A1 zeigt einen vergleichbaren Drehübertrager, der allerdings speziell zur Kopplung eines Hochfrequenzsignals von einer Koaxialleitung zu einer Streifenleitung ausgelegt ist, wobei die Koaxialleitung in Axialrichtung der Drehachse und die Streifenleitung radial zur Drehrichtung angeordnet ist.

Die EP 1 148 572 A1 offenbart eine ähnliche Verbindungsstruktur zur Übertragung hochfrequenter Signale zwischen zwei verschiedenen Substraten wie die zuvor genannte EP 1 783 855 A1. Alternativ zu Schlitzleitungen werden hier unter anderem auch Leitungen vorgeschlagen, bei denen ein Streifen aus dielektrischem Material zwischen zwei planparallelen Elektrodenplättchen eingeschlossen ist.

Die DE 40 05 654 A1 beschreibt eine drehbewegliche Kupplungsvorrichtung für HF-Koaxialleitungen, bei der die Längsachse der beiden zu kuppelnden Leitungen gleichzeitig die Drehachse darstellt. Die beiden Innenleiter enden jeweils an einem Induktivitätselement, welches durch einen planaren spiralförmigen Leiter gebildet wird. Diese Induktivitätselemente bewirken gleichzeitig sowohl eine induktive wie eine kapazitive Kopplung der beiden Koaxialleitungen miteinander.

Die Aufgabe der Erfindung ist es, bei der aus der vorausgehend erstgenannten Schrift bekannten Überwachungsvorrichtung die Qualität des Messsignals zu verbessern.

Diese Aufgabe wird erfindungsgemäß durch eine Vorrichtung mit den Merkmalen des Anspruchs 1 gelöst. Vorteilhafte Ausgestaltungen sind in den Unteransprüchen angegeben.

Erfindungsgemäß ist bei einer gattungsgemäßen Überwachungsvorrichtung an derjenigen axialen Position, an welcher ein Kanalabschnitt an der äußeren Oberfläche der Arbeitsspindel endet, ein zweiteiliger richtungssymmetrischer passiver Mikrowellenkoppler angeordnet, von dem ein erster Teil an oder in einem Ende des Kanalabschnitts in der Arbeitsspindel und ein zweiter Teil an oder in einem Ende eines Kanalabschnitts in dem Stator so angeordnet ist, dass sich die beiden Teile des Mikrowellenkopplers in einer vorbestimmten Winkelposition der Arbeitsspindel zur Übertragung eines Mikrowellensignals über den Luftspalt hinweg gegenüberstehen. Hierbei führt der Kanalabschnitt in dem Stator bis zu der Messeinrichtung und stellt einen Pfad für elektromagnetische Signale zwischen der Messeinrichtung und dem zweiten Teil des Mikrowellenkopplers bereit und es ist sowohl in dem Kanalabschnitt in der Arbeitsspindel, als auch in dem Kanalabschnitt in dem Stator jeweils eine Koaxialleitung angeordnet. Beide Teile des Mikrowellenkopplers weisen einen von einem Dielektrikum ausgefüllten Endabschnitt des jeweiligen Kanalabschnitts auf und der Innenleiter der jeweiligen Koaxialleitung erstreckt sich um ein vorbestimmtes Maß in das Dielektrikum in dem Endabschnitt hinein, oder beide Teile des Mikrowellenkopplers bestehen jeweils aus einer am Ende eines der Kanalabschnitte angeordneten und dort an die jeweilige Koaxialleitung angeschlossenen Patchantenne oder Schlitzantenne, bei der die Längsrichtung des Schlitzes die Umfangsrichtung der Arbeitsspindel bzw. der dieser gegenüberliegenden Oberfläche des Stators ist.

Gegenüber dem Stand der Technik, bei dem in einer vorbestimmten Winkelposition lediglich zwei Bohrungen auf beiden Seiten des Luftspalts in eine fluchtende Ausrichtung gelangen, kann die Beeinträchtigung der Signalqualität des Messsignals beim Übergang über den Luftspalt, insbesondere die Dämpfung des Signals durch diesen Übergang, durch die Anordnung eines zweiteiligen Mikrowellenkopplers einer der vorausgehend genannten Ausführungsformen deutlich verringert werden. Von wesentlicher Bedeutung ist hierbei die Richtungssymmetrie der Übertragungscharakteristik, da sowohl ein Sendesignal, als auch ein Reflexionssignal den Luftspalt in einander entgegengesetzten Richtungen möglichst verlustarm überwinden müssen.

Weitere besonders vorteilhafte Merkmale der Erfindung sind den Unteransprüchen zu entnehmen.

Nachfolgend werden Ausführungsbeispiele der Erfindung unter Bezugnahme auf die Zeichnungen beschrieben. In diesen zeigt
- Fig. 1: eine Vorderansicht einer Arbeitsspindel,
- Fig. 2: eine schematische Schnittansicht einer fehlerhaften Werkzeugspannung,
- Fig. 3: eine schematische Längsschnittansicht einer Vorrichtung zur Überwachung der Werkzeugplananlage,
- Fig. 4: eine schematische Darstellung eines Mikrowellenkopplers,
- Fig. 5: eine schematische Darstellung einer ersten Ausführungsform eines erfindungsgemäßen Mikrowellenkopplers,
- Fig. 6: eine schematische Darstellung einer Schlitzantenne, die Bestandteil einer zweiten Ausführungsform eines erfindungsgemäßen Mikrowellenkopplers ist,
- Fig. 7: eine schematische Darstellung einer Patchantenne, die Bestandteil einer dritten Ausführungsform eines erfindungsgemäßen Mikrowellenkopplers ist, und
- Fig. 8: eine schematische Darstellung eines anderen Mikrowellenkopplers.

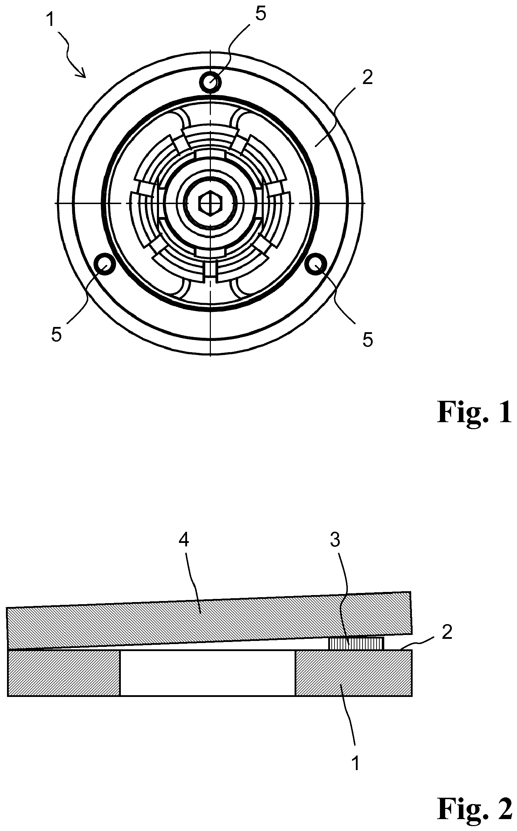

Fig. 1 zeigt die Vorderansicht einer Arbeitsspindel 1, die Bestandteil einer nicht dargestellten Bearbeitungsmaschine, insbesondere einer Werkzeugmaschine ist. Die Arbeitsspindel 1 weist an ihrer Stirnseite eine oder mehrere ebene Anlageflächen 2 auf, an denen ein Werkzeug oder ein Werkzeugträger im gespannten Zustand plan anliegen soll. Im Falle mehrerer separater Anlageflächen 2 liegen diese genau planparallel zueinander in einer einzigen Ebene. Zur Verwendung an der Arbeitsspindel 1 bestimmte Werkzeuge oder Werkzeugträger, wobei letztere ihrerseits verschiedene Werkzeuge aufnehmen können, weisen an ihrer Rückseite ebenfalls entsprechende stirnseitige Anlageflächen auf. Bei einer planen Anlage der werkzeugseitigen bzw. werkzeugträgerseitigen Anlageflächen an der spindelseitigen Anlagefläche 2 verläuft die Längsachse des Werkzeugs bzw. Werkzeugträgers genau parallel zur Längsachse der Arbeitsspindel 1. Die Zentrierung des Werkzeugs bzw. Werkzeugträgers bezüglich der Arbeitsspindel 1 erfolgt durch kegelförmige Auflageflächen im Inneren der Arbeitsspindel 1.

Im Fall einer Verschmutzung einer Anlagefläche 2 ist keine plane Anlage des Werkzeugs oder Werkzeugträgers an der Arbeitsspindel 1 mehr möglich. Insbesondere kann eine solche Verschmutzung durch bei der Bearbeitung eines Werkstücks anfallende Späne erfolgen. Schematisch ist eine solche Situation in Fig. 2 dargestellt. Auf dem rechten Teil der Anlagefläche 2 liegt ein Span 3, der beim Spannen des Werkzeugs 4 an der Arbeitsspindel 1 zwischen dieser und dem Werkzeug 4 eingeklemmt wird und dafür sorgt, dass ein keilförmiger Spalt zwischen beiden besteht. Bei der Bearbeitung eines Werkstücks mit einem solchermaßen schrägstehenden Werkzeug 4 ist kein maßhaltiges Ergebnis, sondern Ausschuss zu erwarten.

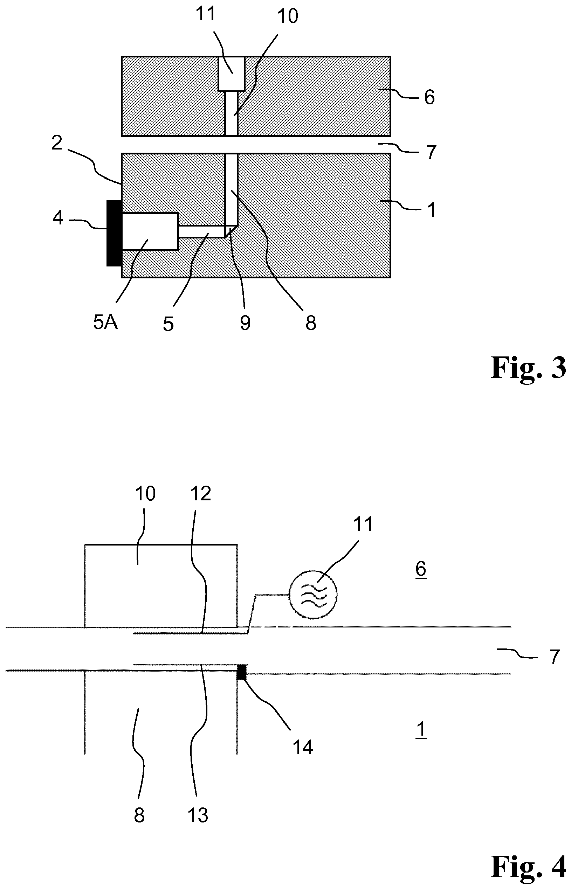

An der Anlagefläche 2 sind mehrere, im gezeigten Beispiel drei in Axialrichtung der Arbeitsspindel 1 verlaufende Kanalabschnitte 5 in Form von Bohrungen vorgesehen, von denen in Fig. 1 jeweils der stirnseitige Austritt aus der Arbeitsspindel 1 sichtbar ist. Fig. 3 zeigt eine schematische Längsschnittansicht eines Ausschnitts der Arbeitsspindel 1 und eines Stators 6, in dem die Arbeitsspindel 1 an einer in Fig. 3 nicht sichtbaren Stelle drehbar gelagert ist, und von dem sie in dem in Fig. 3 sichtbaren Bereich durch einen dünnen Luftspalt 7 getrennt ist. Dort ist nur der obere der drei axialen Kanalabschnitte 5 von Fig. 1 zu sehen. Dieser trifft im Inneren der Arbeitsspindel 1 auf einen in Radialrichtung der Arbeitsspindel 1 verlaufenden Kanalabschnitt 8, wodurch ein dritter Kanalabschnitt 9 definiert wird, in dem der durch die einzelnen Abschnitte 5, 8 und 9 gebildete, durchgehende Kanal seine Richtung um 90° ändert. In gleicher Weise trifft auch jeder der beiden anderen, in Fig. 3 nicht sichtbaren axialen Kanalabschnitte 5 jeweils auf einen zugeordnete radialen Kanalabschnitt 8 in der Arbeitsspindel 1. In der in Fig. 3 gezeigten Winkelstellung der Arbeitsspindel 1 fluchtet der radiale Kanalabschnitt 8 in der Arbeitsspindel 1 mit einem radialen Kanalabschnitt 10 in dem Stator 6.

In einem sich von außen in den Stator 6 erstreckenden Hohlraum ist eine elektronische Messeinrichtung 11 in Form eines Radarsystems, das einen Sender, einen Empfänger und eine Antenne umfasst, angeordnet. Die Antenne ist auf den Kanalabschnitt 10 in dem Stator 6 ausgerichtet, um die Einstrahlung eines Radarsignals in den Kanalabschnitt 10 und den Empfang eines Radarsignals aus dem Kanalabschnitt 10 zu ermöglichen. Der Kanalabschnitt 10 fungiert ebenso wie die Kanalabschnitte 5, 8 und 9 für eine eingestrahlte elektromagnetische Welle als Hohlleiter, wie aus der Radartechnik hinreichend bekannt ist.

In der in Fig. 3 gezeigten Winkelposition der Arbeitsspindel 1 besteht somit insgesamt ein als Hohlleiter wirksamer Kanal 5, 8, 9, 10 zwischen der Messeinrichtung 11 und der rückwärtigen Auflagefläche des Werkzeugs 4, mit dem dieses auf der Auflagefläche 2 der Arbeitsspindel 1 aufliegt. Ein von der Messeinrichtung 11 in den Kanalabschnitt 10 eingestrahltes Radarsignal breitet sich über den Kanalabschnitt 10, den damit fluchtenden Kanalabschnitt 8 und die Kanalabschnitte 9 und 5 bis zu der rückwärtigen Auflagefläche des Werkzeugs 4 aus, wobei es in dem Kanalabschnitt 9 um 90° umgelenkt wird. Dabei führt der Kanal 5, 8, 9, 10 die sich in ihm ausbreitende elektromagnetische Welle im Sinne eines Hohlleiters. An der rückwärtigen Auflagefläche des Werkzeugs 4 wird das Radarsignal reflektiert und läuft in dem Kanal 5, 8, 9, 10 in entgegengesetzter Richtung bis zu der Messeinrichtung 11 zurück, wo es empfangen und verarbeitet wird, um die exakte Lage des Werkzeugs 4 bezüglich der Auflagefläche 2 der Arbeitsspindel 1 zu ermitteln.

Falls der Kanal 5, 8, 9, 10 mit einem Dielektrikum gefüllt ist, ändert sich die Grenzfrequenz, ab welcher der Kanal 5, 8, 9, 10 als Hohlleiter wirksam ist. Es ist äußerst zweckmäßig, den Kanal 5, 8, 9, 10 zumindest im Bereich des werkzeugseitigen Abschnitts 5 mit einem Dielektrikum zu füllen, um ein Eindringen von Schmutz und Spänen, welches die Wellenausbreitung offensichtlich stören würde, zu verhindern. Zur Schaffung homogener Ausbreitungseigenschaften ist es jedoch bevorzugt, den gesamten Kanal 5, 8, 9, 10 mit einem Dielektrikum zu füllen. Geeignet ist hierfür beispielsweise eine Vergussmasse auf Polyurethanbasis.

Zur Erhöhung der Empfindlichkeit ist es zweckmäßig, den Abschnitt 5 so zu gestalten, dass eine möglichst ausgeprägte Resonanz auftritt, was in Fig. 3 durch eine Erweiterung am werkzeugseitigen Ende zu einer Kammer 5A, die zusammen mit der rückwärtigen Oberfläche des Werkzeugs 4 einen Mikrowellenresonator bildet, schematisch dargestellt ist. Hierdurch kann ein Resonator hoher Güte realisiert werden, dessen Resonanzfrequenz von der Lage der rückwärtigen Auflagefläche des Werkzeugs 4 bezüglich der Arbeitsspindel 1 abhängt. Ein solcher Mikrowellenresonator wird bereits bei einer geringfügigen Abweichung der Lage des Werkzeugs 4 von einer perfekten Plananlage an der Auflagefläche 2 der Arbeitsspindel 1 verstimmt, was anhand einer Messung des Reflexionskoeffizienten bei einer Variation der Frequenz des eingestrahlten Signals durch eine in dem Radarsystem 11 enthaltene Signalverarbeitungseinrichtung detektiert werden kann.

Die vorausgehend beschriebene Vorrichtung entspricht dem aus der zuvor genannten DE 10 2009 005 745 A1 bekannten Stand der Technik. Auf die Funktion dieser Vorrichtung hat außer dem Kanal 5, 8, 9, 10 und der Kammer 5A auch der zwischen dem Stator 6 und der rotierenden Arbeitsspindel 1 vorhandenen Luftspalt 7, an dem die Kanalabschnitte 8 und 10 miteinander fluchtend enden, einen Einfluss. Wie die Vorrichtung erfindungsgemäß verbessert werden kann, um den Einfluß dieses Luftspalts 7 zu minimieren, wird nachfolgend anhand der weiteren Figuren 4 bis 9 erläutert.

Fig.4 zeigt eine Detailansicht eines Ausschnitts aus Fig. 3 mit einer hier nicht beanspruchten Ausführungsform eines Mikrowellenkopplers zur dämpfungsarmen Überwindung des Luftspalts 7 zwischen dem Stator 6 und der Arbeitsspindel 1. Während der Übertragung eines Messsignals über den Luftspalt 7 hinweg steht die Öffnung in der Arbeitsspindel 1, in welcher sich der als Hohlwellenleiter wirksame Kanalabschnitt 8 befindet, fluchtend gegenüber einem in diesem Fall als Sackbohrung ausgebildeten und ebenfalls als Hohlwellenleiter wirksamen Kanalabschnitt 10 gleichen Durchmessers in dem Stator 6. Der Kanalabschnitt 10 ist möglichst kurz ausgeführt, vorzugsweise wie bei Übergängen zwischen Hohlwellenleitern und Koaxialleitungen bekannt, in einer Länge von einem Viertel der Hohlleiterwellenlänge, des Kanalabschnitts 10.

Ein auf der Oberfläche des Kanalabschnitts 10 angebrachter Monopol 12 ist über eine Zuleitung mit einer Messeinrichtung 11 verbunden, die eine Sende- und Empfangseinheit für Mikrowellensignale sowie eine Signalverarbeitungseinrichtung enthält. Die Einspeisung eines Mikrowellensignals durch die Messeinrichtung 11 und bewirkt die Anregung von sich in Richtung des Kanalabschnitts 8 in der Arbeitsspindel 1 ausbreitenden Wellen. Die Messeinrichtung 11 ist an der Außenseite des Stators 6 angeordnet und durch eine Zuleitung, die in einem zusätzlichen Kanal in dem Stator 6 verlegt ist, mit dem Monopol 12 verbunden, was in Fig. 4 nicht im einzelnen dargestellt ist.

Diese Wellenleiterkopplung über den Luftspalt 7 hinweg lässt sich im Sinne des Reziprozitätstheorems auch auf die umgekehrter Ausbreitungsrichtung anwenden. Zur Unterstützung der Überwindung des Luftspalts 7 ist hierzu am Ende des Kanalabschnitts 8 in der Arbeitsspindel 1 ebenfalls ein Monopol 13 angebracht, welcher mit der Arbeitsspindel 1 am Rand 14 des Kanalabschnitts 8 direkt verbunden ist. Die enge Nachbarschaft zwischen dem Monopol 12 auf der Seite des Stators 6 und dem mit der Arbeitsspindel 1 verbundenen Monopol 13 bewirkt eine Kopplung mit geringer Dämpfung des Übertritt von Mikrowellenleistung über den Luftspalt 7 in beiden Richtungen.

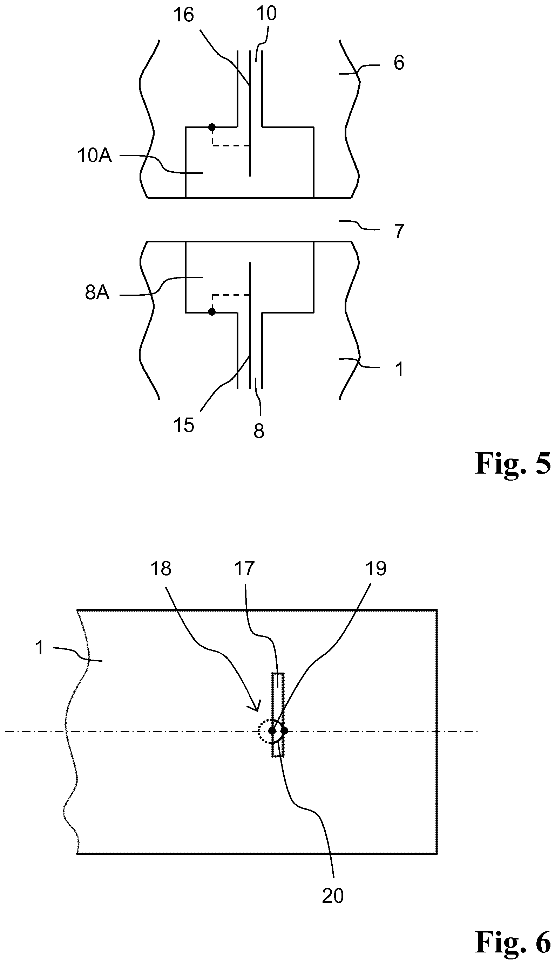

Fig. 5 zeigt eine erste Ausführungsform eines erfindungsgemäßen Mikrowellenkopplers zur dämpfungsarmen Überwindung des Luftspalts 7 zwischen der Arbeitsspindel 1 und dem Stator 6 der Werkzeugmaschine. In zueinander spiegelsymmetrischen Ausnehmungen in der Arbeitsspindel 1 und dem Stator 6, welche Endabschnitte 8A und 10A der dortigen Kanalabschnitte 8 bzw. 10 bilden, sind Körper aus dielektrischem Material wie Vergussmasse oder Keramik angebracht. Diese weisen zueinander koaxiale Bohrungen auf, in welche jeweils ein Endsegment des Innenleiters 15 bzw. 16 einer Koaxialleitung eingeführt ist. Ein solcher dielektrischer Körper stellt einen Wellenleiter dar, der durch das Endsegment des sich geradlinig in ihn hinein erstreckenden Innenleiters 15 bzw. 16 im E01-Mode angeregt wird. Der Außenleiter der jeweiligen Koaxialleitung ist mit der Arbeitsspindel 1 bzw. mit dem Stator 6 verbunden. Die Koaxialleitung mit dem Innenleiter 15 verläuft von dem Kanalabschnitt 8 aus weiter über Kanalabschnitte 9 und 5 und ist am Ende des Kanalabschnitts 5 an den Mikrowellenresonator 4, 5A (Fig. 3) angekoppelt. Die Koaxialleitung mit dem Innenleiter 16 verläuft in einem durchgehenden Kanalabschnitt 10 in dem Stator 6 und ist an ihrem anderen Ende mit einer Messeinrichtung 11 verbunden.

Alternativ zum E01-Mode kann auch der H11-Mode angeregt werden. Hierzu muss der jeweilige Innenleiter 15 bzw. 16 der Koaxialleitung in dem Endabschnitt 8A bzw. 10A des Kanals 8 bzw. 10 in Form einer Schleife geführt werden, d.h. er muss sich zunächst eine bestimmte Länge in seiner ursprünglichen Richtung senkrecht zur Oberfläche der Arbeitsspindel bzw. des Stators in den Endabschnitt 8A bzw. 10A hinein erstrecken, dann eine bestimmte Länge quer zu dieser Richtung und schließlich parallel zu dieser Richtung zurück bis zur Oberfläche der Arbeitsspindel 1 bzw. des Stators 6, wie es in Fig. 6 mit gestrichelten Linien dargestellt ist. An seinem Ende ist der Innenleiter 15 bzw. 16 in diesem Fall mit der Oberfläche der Arbeitsspindel 1 bzw. des Stators 6 elektrisch verbunden. Die Anregung des H11-Mode hat gegenüber dem E01-Mode den Vorteil geringerer Verluste.

Eine weitere verlustarme Möglichkeit der Überbrückung des Luftspalts 7 besteht erfindungsgemäß in der Platzierung jeweils einer an die zu übertragende Wellenlänge angepassten Schlitzantenne auf der Arbeitsspindel 1 und an dem Stator 6, d.h. an den jeweiligen Enden der Kanalabschnitte 8 und 10 an dem Luftspalt 7. Die Schmalseiten dieser Schlitzantennen verlaufen in diesem Fall in Axialrichtung der Arbeitsspindel 1 und die Langseiten folglich in Umfangsrichtung. In Fig. 6 ist schematisch ein Teil dieser Ausführungsform eines erfindungsgemäßen Mikrowellenkopplers, nämlich die Schlitzantenne in der Arbeitsspindel 1 in einer radialen Draufsicht auf die Arbeitsspindel 1 dargestellt. Die Längsachse der Arbeitsspindel 1 ist dort durch eine gestrichelte waagrechte Linie gekennzeichnet.

Die Schlitzantenne besteht in einem in Umfangsrichtung verlaufenden Schlitz 17, an den eine Koaxialleitung 18 gekoppelt ist, welche in einem radialen Abschnitt 8 eines in Fig. 6 nicht sichtbaren Kanals 5, 8, 9 im Inneren der Arbeitsspindel 1, wie er in Fig. 3 gezeigt ist, verlegt ist. Der Innenleiter 19 und der Außenleiter 20 der Koaxialleitung 18 sind an gegenüberliegenden Stellen an den Langseiten des Schlitzes 17 in einem definiertem Abstand von einem Längsende des Schlitzes 17 elektrisch mit dessen Rand verbunden. Die Schlitzantenne in dem Stator 6 befindet sich an derselben axialen Position und ist wie bei der Ausführungsform von Fig. 5 über eine in einem durchgehenden Kanalabschnitt 10 in dem Stator 6 verlegte Koaxialleitung mit einer Messeinrichtung 11 verbunden. Der Schlitz in dem Stator 6 verläuft ebenfalls in Umfangsrichtung, so dass für einen größtmöglichen Rotationswinkelbereich eine Überlappung der einander gegenüberliegenden Schlitzantennen besteht, die eine Übertragung eines Mikrowellensignals über den Luftspalt 7 hinweg ermöglicht.

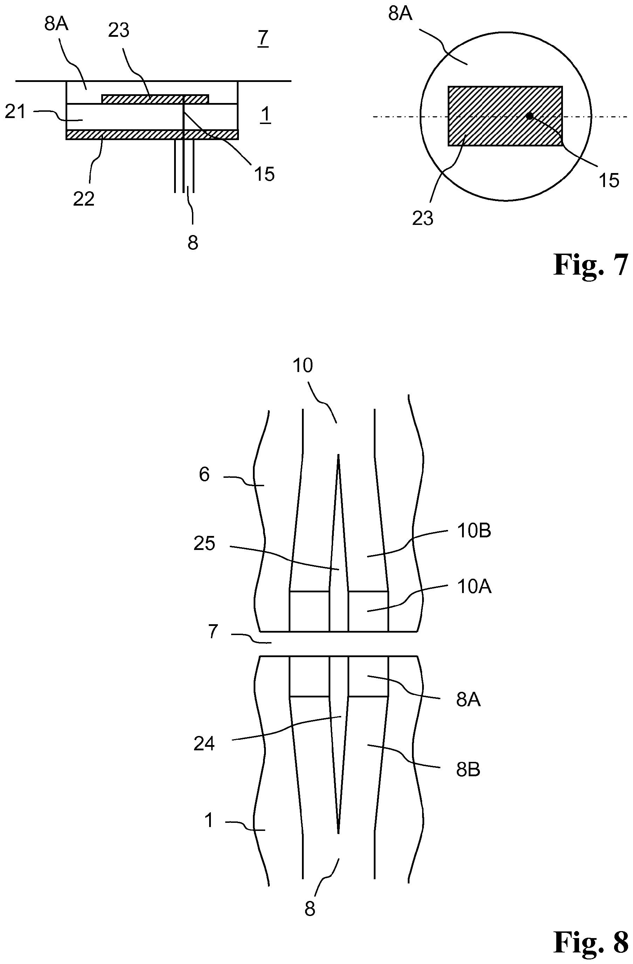

Eine erfindungsgemäße Alternative zu einer Schlitzantenne als Komponente eines Mikrowellenkopplers zur erfindungsgemäßen Signalübertragung über den Luftspalt 7 hinweg stellt eine Patchantenne dar. Der an der Arbeitsspindel 1 angeordnete Teil dieser Ausführungsform eines Mikrowellenkopplers ist in Fig 7 in zwei Ansichten, nämlich links in einer Schnittansicht und rechts in einer radialen Draufsicht auf die Arbeitsspindel 1 gezeigt. Die Schnittansicht bezieht sich auf die gestrichelte Linie in der Draufsicht, welche ebenso wie in Fig. 6 der Längsachse der Arbeitsspindel 1 entspricht. Die Patchantenne ist in einer Ausnehmung in der Arbeitsspindel 1, welche einen Endabschnitt 8A mit vergrößertem Querschnitt eines radialen Kanalabschnitts 8 bildet, angeordnet.

Sie weist einen dielektrischen Körper 21, beispielsweise eine Leiterplatte aus Kunststoff oder Keramikmaterial, mit zwei zueinander parallelen Oberflächen auf. Die untere Oberfläche ist ganzflächig von einer Metallschicht 22 bedeckt, welche die Masseebene der Patchantenne bildet und auf dem Boden des Endabschnitts 8A aufliegt. Auf der gegenüberliegenden Oberfläche, die dem Luftspalt 7 zugewandt ist, befindet sich ein als Mikrowellenstrahler wirkendes Patch 23, nämlich eine Metallschicht von rechteckiger Form und definierten Abmessungen, die geringer sind als die Gesamtabmessungen dieser Oberfläche.

Der Innenleiter 15 einer in dem Kanalabschnitt 8 verlegten Koaxialleitung erstreckt sich durch eine Bohrung in dem Dielektrikum 21 hindurch bis zu dem Patch 23 und ist mit diesem an einer definierten Stelle außerhalb von dessen Zentrum elektrisch verbunden. Der Außenleiter der Koaxialleitung ist mit der Metallschicht 22 auf der gegenüberliegenden Oberfläche verbunden. Der Teil des Kanalabschnitts 8A oberhalb der Patchantenne ist vorzugsweise ebenfalls von einem Dielektrikum ausgefüllt, bei dem es sich insbesondere um eine Vergussmasse aus Kunststoff handeln kann. Eine spiegelbildliche Anordnung einer Patchantenne ist an der gleichen axialen Position in der Oberfläche des Stators 6 vorgesehen.

Eine weitere hier nicht beanspruchte Ausführungsform einer Übertragungseinrichtung zur dämpfungsarmen Überwindung des Luftspalts 7 zwischen der Arbeitsspindel 1 und dem Stator 6 einer Werkzeugmaschine ist in Fig. 8 dargestellt. In der Arbeitsspindel 1 und im Stator 6 erweitern sich die beiden dortigen Kanalabschnitte 8 und 10 zunächst in Übergangsabschnitten 8B bzw. 10B konisch und enden an dem Luftspalt 7 in zylindrischen Endabschnitten 8A bzw. 10A mit größerem Durchmesser. Die Kanalabschnitte 8 und 10 fungieren als Hohlwellenleiter und sind bis zu ihren Enden, d.h. einschließlich der konischen Übergangsabschnitte 8B und 10B sowie der zylindrischen Endabschnitte 8A und 10A mit einem Material relativ niedriger Permittivität ausgefüllt.

In den Endabschnitten 8A und 10A und den konischen Abschnitten 8B und 10B sind koaxial Körper 24 bzw. 25 aus einem Material höherer Permittivität eingefügt oder eingebettet, die jeweils im Bereich der zylindrischen Endabschnitte 8A und 10A ebenfalls eine zylindrische Form und im Bereich der konischen Übergangsabschnitte 8B und 10B eine Kegelform haben, wobei die Spitze des Kegels eines Körpers 24 bzw. 25 jeweils bis zum inneren Ende des konischen Kanalabschnitts 8B bzw. 10B reicht. Die Körper 24 und 25 höherer Permittivität können auch jeweils aus zwei Teilen, nämlich einem zylindrischen und einem kegelförmigen Teil zusammengesetzt sein. Ebenso kann das Dielektrikum niedrigerer Permittivität im Bereich der Übergangsabschnitte 8B und 10B und der Endabschnitte 8A und 10A ein von der dielektrischen Füllung der anschließenden Kanalabschnitte 8 und 10 separater Körper sein, der wiederum seinerseits aus zwei Teilen zusammengesetzt sein kann.

Aus einem der Kanalabschnitte 8 oder 10 ankommende Mikrowellen, die sich dort vorzugsweise im H11-Mode fortpflanzen, gehen aufgrund der beschriebenen Form und Permittivitätsverteilung der Übergangsabschnitte 8B und 10B und der Endabschnitte 8A und 10A innerhalb eines konischen Abschnitts 8B bzw. 10B in den LP01-Mode eines dielektrischen Wellenleiters über und treten in diesem Mode aus dem zylindrischen Endabschnitt 8A bzw. 10A in den Luftspalt 7 aus. Dessen Überwindung erfolgt aufgrund der stark reduzierten Wandströme des LP01-Modes mit einer reduzierten Reflexion.

Auf die Funktionsweise der Messeinrichtung 11 wurde in der vorausgehenden Beschreibung nicht im einzelnen eingegangen, da hierzu in der eingangs genannten DE 10 2009 005 745 A1 detaillierte Angaben vorhanden sind, auf die hiermit verwiesen wird. Diese Angaben beziehen sich zwar auf den Einsatz eines Radarsystems als Messeinrichtung 11 und setzen daher eine Wirkung des Kanals 5, 8, 9, 10 als Hohlwellenleiter für ein Radarsignal voraus. Wenn in dem Kanal 5, 8, 9, 10 stattdessen als Wellenleiter eine Koaxialleitung verlegt ist, ändert sich an der Messeinrichtung 11 lediglich deren Ankopplung an den Wellenleiter, für die in diesem Fall keine Antenne mehr benötigt wird, während das Funktionsprinzip der Reflexionsmessung aber dasselbe bleibt. Der korrekte Anschluss einer Koaxialleitung an eine Reflexionsmesseinrichtung ist in Fachkreisen bekannt und bedarf daher an dieser Stelle keiner Erläuterung.

Wie anhand Fig. 1 erläutert wurde, können in der Arbeitsspindel 1 mehrere Kanäle 5, 8, 9 vorgesehen sein, deren jeweilige radiale Abschnitte 8 im Zuge einer Umdrehung der Arbeitsspindel 1 abwechselnd eine mit dem Kanalabschnitt 10 in dem Stator 6 fluchtende Position passieren. Auch könnten mehrere Messeinrichtungen 11 am Umfang des Stators 6 verteilt sein. Die Zweiteiligkeit des erfindungsgemäßen Mikrowellenkopplers bedeutet also nicht, dass er nur aus genau zwei Teilen besteht. Vielmehr ist damit gemeint, dass mindestens ein Teil an der Arbeitsspindel 1 und mindestens ein anderer zur Signalübertragung von und zu dem ersten Teil geeigneter zweiter Teil an dem Stator 6 angeordnet ist.

## Patentansprüche

1. Vorrichtung zur Überwachung der Lage eines Werkzeugs (4) oder Werkzeugträgers an einer in einem Stator (6) drehbar gelagerten Arbeitsspindel (1), insbesondere in einer Bearbeitungsmaschine, mit mindestens einem Kanal (5, 8, 9), der von einer durch einen Luftspalt (7) von einer Oberfläche des Stators (6) getrennten äußeren Oberfläche der Arbeitsspindel (1) zu dem Werkzeug (4) oder Werkzeugträger führt und einen Pfad für die Ausbreitung eines elektromagnetischen Signals bildet, mit einer an dem Stator (6) angeordneten Messeinrichtung (11), welche eine Sendeeinheit zur Einkopplung eines elektromagnetischen Signals in den Kanal (5, 8, 9), eine Empfangseinheit zum Empfang eines aus dem Kanal (5, 8, 9) reflektierten Signals und eine Signalverarbeitungseinrichtung zur Ermittlung eines Maßes für die Lage des Werkzeugs (4) oder Werkzeughalters in Bezug auf die Arbeitsspindel (1) anhand des reflektierten Signals enthält, **dadurch gekennzeichnet, dass** an derjenigen axialen Position, an welcher ein Kanalabschnitt (8) an der äußeren Oberfläche der Arbeitsspindel (1) endet, ein zweiteiliger richtungssymmetrischer passiver Mikrowellenkoppler angeordnet ist, von dem ein erster Teil an oder in einem Ende des Kanalabschnitts (8) in der Arbeitsspindel (1) und ein zweiter Teil an oder in einem Ende eines Kanalabschnitts (10) in dem Stator (6) so angeordnet ist, dass sich die beiden Teile des Mikrowellenkopplers in einer vorbestimmten Winkelposition der Arbeitsspindel (1) zur Übertragung eines Mikrowellensignals über den Luftspalt (7) hinweg gegenüberstehen, dass der Kanalabschnitt (10) in dem Stator (6) bis zu der Messeinrichtung (11) führt und einen Pfad für elektromagnetische Signale zwischen der Messeinrichtung (11) und dem zweiten Teil des Mikrowellenkopplers bereitstellt, dass sowohl in dem Kanalabschnitt (8) in der Arbeitsspindel (1), als auch in dem Kanalabschnitt (10) in dem Stator (6) jeweils eine Koaxialleitung angeordnet ist, und dass beide Teile des Mikrowellenkopplers einen von einem Dielektrikum ausgefüllten Endabschnitt (8A, 10A) des jeweiligen Kanalabschnitts (8, 10) aufweisen und sich der Innenleiter (15,16) der jeweiligen Koaxialleitung um ein vorbestimmtes Maß in das Dielektrikum in dem Endabschnitt (8A, 10A) hinein erstreckt, oder dass beide Teile des Mikrowellenkopplers jeweils aus einer am Ende eines der Kanalabschnitte (8, 10) angeordneten und dort an die jeweilige Koaxialleitung angeschlossenen Patchantenne (21, 22, 23) oder Schlitzantenne, bei der die Längsrichtung des Schlitzes (17) die Umfangsrichtung der Arbeitsspindel (1) bzw. der dieser gegenüberliegenden Oberfläche des Stators (6) ist, bestehen.

2. Vorrichtung nach Anspruch 1, **dadurch gekennzeichnet, dass** die zwei Teile des Mikrowellenkopplers jeweils einen Bereich (8A, 8B, 10A, 10B) mit vergrößertem Querschnitt des an dem Luftspalt (7) endenden Kanalabschnitts (8, 10) in der Arbeitsspindel (1) bzw. in dem Stator (6) aufweisen.

3. Vorrichtung nach Anspruch 1 oder 2, **dadurch gekennzeichnet, dass** der sich um ein vorbestimmtes Maß in das Dielektrikum in dem Endabschnitt (8A, 10A) hinein erstreckende Innenleiter (15, 16) in dem Dielektrikum in Form einer Schleife geführt ist und sein Ende mit einer Oberfläche des Endabschnitts (8A, 10A) des jeweiligen Kanalabschnitts (8, 10) elektrisch verbunden ist.

4. Vorrichtung nach Anspruch 2 oder 3, **dadurch gekennzeichnet, dass** der Bereich mit vergrößertem Querschnitt (8A, 8B, 8A, 10B) jeweils einen an dem Luftspalt (7) endenden Abschnitt (8A, 10A) mit konstanten Querschnitt aufweist.

## Claims

1. Device for monitoring the position of a tool (4) or tool carrier on a work spindle (1) rotatably mounted in a stator (6), in particular in a processing machine, having at least one channel (5, 8, 9), which leads from an outer surface of the work spindle (1) separated by an air gap (7) from a surface of the stator (6) to the tool (4) or tool carrier and forms a path for the propagation of an electromagnetic signal, having a measuring device (11) arranged on the stator (6) which contains a transmitter unit to couple an electromagnetic signal into the channel (5, 8, 9), a receiving unit to receive a signal reflected from the channel (5, 8, 9) and a signal-processing device to determine an amount for the position of the tool (4) or tool holder with regard to the work spindle (1) using the reflected signal, **characterised in that** at that axial position at which a channel section (8) on the outer surface of the work spindle (1)terminates, is arranged a two-part directional symmetrical passive microwave coupler, of which a first part is arranged on or in an end of the channel section (8) in the work spindle (1) and a second part is arranged on or in an end of a channel section (10) in the stator (6) so that the two parts of the microwave coupler are opposite one another at a predetermined angular position of the work spindle (1) to transmit a microwave signal via the air gap (7), **in that** the channel section (10) in the stator (6) leads as far as the measuring device (11) and provides a path for electromagnetic signals between the measuring device (11) and the second part of the microwave coupler, **in that** both in the channel section (8) in the work spindle(1) and in the channel section (10) in the stator (6) is arranged in each case a coaxial cable, and **in that** both parts of the microwave coupler have an end section (8A, 10A), filled by a dielectric, of the respective channel section (8, 10) and the inner conductor (15, 16) of the respective coaxial cable extends by a predetermined amount into the dielectric in the end section (8A, 10A), or **in that** both parts of the microwave coupler consist in each case of a patch antenna (21, 22, 23) or slot antenna arranged at the end of one of the channel sections (8, 10) and connected there to the respective coaxial cable, and in which the longitudinal direction of the slot (17) is the peripheral direction of the work spindle (1) or of the surface of the stator (6) opposite the latter.

2. Device according to claim 1, **characterised in that** the two parts of the microwave coupler have respectively a region (8A, 8B, 10A, 10B) having enlarged cross-section of the channel section (8, 10) terminating at the air gap (7) in the work spindle (1) or in the stator (6).

3. Device according to claim 1 or 2, **characterised in that** the inner conductor (15, 16) extending by a predetermined amount into the dielectric in the end section (8A, 10A) is guided in the dielectric in the form of a loop and its end is electrically connected to a surface of the end section (8A, 10A) of the respective channel section (8, 10).

4. Device according to claim 2 or 3, **characterised in that** the region having enlarged cross-section (8A, 8B, 10A, 10B) has respectively a section (8A, 10A) terminating at the air gap (7) and having constant cross-section.

## Revendications

1. Dispositif servant à surveiller la position d'un outil (4) ou d'un support d'outil au niveau d'une broche de travail (1) montée de manière à pouvoir tourner dans un stator (6), en particulier dans une machine d'usinage, avec au moins un canal (5,8,9), qui mène depuis une surface extérieure, séparée d'une surface du stator (6) par un entrefer (7), de la broche de travail (1) à l'outil (4) ou au support d'outil et qui forme un chemin pour la propagation d'un signal électromagnétique, avec un système de mesure (11) disposé au niveau du stator (6), lequel système de mesure contient une unité d'envoi servant à injecter un signal électromagnétique dans le canal (5,8, 9), une unité de réception servant à recevoir un signal réfléchi depuis le canal (5, 8, 9) et un système de traitement de signaux servant à déterminer une distance pour la position de l'outil (4) ou du support d'outil par rapport à la broche de travail (1) à l'aide du signal réfléchi, **caractérisé en ce qu'**est disposé, au niveau de la position axiale, au niveau de laquelle précisément une section de canal (8) se termine au niveau de la surface extérieure de la broche de travail (1), un coupleur de micro-ondes passif symétrique en direction en deux parties, dont une première partie est disposée au niveau d'une extrémité ou dans une extrémité de la section de canal (8) dans la broche de travail (1) et dont une seconde partie est disposée au niveau d'une extrémité ou dans une extrémité d'une section de canal (10) dans le stator (6) de sorte que les deux parties du coupleur de micro-ondes sont en vis-à-vis l'une par rapport à l'autre au-delà de l'entrefer (7) dans une position angulaire prédéfinie de la broche de travail (1) aux fins de la transmission d'un signal à micro-ondes, que la section de canal (10) dans le stator (6) mène jusqu'au système de mesure (11) et fournit un chemin pour des signaux électromagnétiques entre le système de mesure (11) et la seconde partie du coupleur de micro-ondes, que respectivement un câble coaxial est disposé à la fois dans la section de canal (8) dans la broche de travail (1) et dans la section de canal (10) dans le stator (6), et que les deux parties du coupleur de micro-ondes présentent une section d'extrémité (8A, 10A), remplie par un diélectrique, de la section de canal (8, 10) respective et que le conducteur interne (15, 16) du câble coaxial respectif s'étend sur une distance prédéfinie à l'intérieur du diélectrique dans la section d'extrémité (8A, 10A), ou que les deux parties du coupleur de micro-ondes sont constituées respectivement d'une antenne planaire (21, 22, 23) ou d'une antenne à fente disposée au niveau de l'extrémité d'une des sections de canal (8, 10) et raccordée à cet endroit au câble coaxial respectif, dans laquelle antenne le sens longitudinal de la fente (17) est le sens périphérique de la broche de travail (1) ou de la surface, faisant face à cette dernière, du stator (6).

2. Dispositif selon la revendication 1, **caractérisé en ce que** les deux parties du coupleur de micro-ondes présentent respectivement une zone (8A,8B,10A, 10B) avec une section transversale agrandie de la section de canal (8, 10), se terminant au niveau de l'entrefer (7), dans la broche de travail (1) ou dans le stator (6).

3. Dispositif selon la revendication 1 ou 2, **caractérisé en ce que** le conducteur interne (15, 16) s'étendant sur une distance prédéfinie à l'intérieur du diélectrique dans la section d'extrémité (8A, 10A) est guidé dans le diélectrique sous la forme d'une boucle, et son extrémité est reliée de manière électrique à une surface de la section d'extrémité (8A, 10A) de la section de canal (8, 10) respective.

4. Dispositif selon la revendication 2 ou 3, **caractérisé en ce que** la zone (8A, 8B, 10A, 10B) avec une section transversale agrandie présente respectivement une section (8A, 10A), se terminant au niveau de l'entrefer (7), avec une section transversale constante.
